# EUROPEAN PATENT APPLICATION

(11) **EP 4 723 708 A1**
(43) Date of publication of application: **08.04.2026**
(21) Application number: 25205490.3
(22) Date of filing: 29.09.2025
(51) Int. Cl.: H04W 12/06, H04W 48/18, H04W 60/00

(54) **SYSTEMS AND METHODS FOR HANDLING USER EQUIPMENT PARAMETERS UPON AUTHENTICATION REJECTION**

(30) Priority: 04.10.2024 IN 202421075186; 29.08.2025 US 202519315342
(71) Applicant: MEDIATEK INC., Hsinchu City 30078 (TW)
(72) Inventor: PUNEET, Bengaluru (IN); NIEMI, Marko, Oulu (FI)
(74) Representative: Haseltine Lake Kempner LLP

(57) **Abstract**

A system and method for wireless communication are disclosed herein. In one embodiment, a wireless communication device receives an authentication reject message from a wireless communication node as part of a procedure. In response to receiving the authentication reject message, the wireless communication device deletes a network list to which the wireless communication node belongs. The network list may include a Public Land Mobile Network (PLMN) list or an equivalent Standalone Non-Public Network (SNPN) list. Additionally, the wireless communication device may reset various counters, including a registration attempt counter, an attach attempt counter, a service attempt counter, and a Tracking Area Update (TAU) attempt counter. The procedure may be a registration procedure, an attach procedure, or a Tracking Area Update (TAU) procedure. The system and method may also be implemented in an apparatus comprising a transceiver and a processor configured to perform the described operations.

## Description

### REFERENCE TO RELATED APPLICATION

The application claims priority to and the benefit of Indian Application Number 202421075186, filed October 4, 2024, which is incorporated herein by reference in its entirety for all purposes.

### BACKGROUND

In wireless communication networks, authentication procedures play a crucial role in ensuring secure and authorized access for user equipment (UE) devices. These procedures typically involve the exchange of authentication information between the UE and the network to verify the identity and credentials of the device attempting to connect.

During the authentication process, various parameters and identifiers are utilized, including temporary and permanent identities, security keys, and location information. The network may use different types of identities, such as the Globally Unique Temporary Identifier (GUTI) or the Subscription Concealed Identifier (SUCI), depending on the specific circumstances and security requirements.

In some instances, the authentication process may not be successful, leading to an authentication rejection by the network. This can occur due to various reasons, such as invalid credentials, network errors, or security concerns. When an authentication reject message is received by the UE, it typically triggers a series of actions to handle the rejection and maintain the integrity of the communication system.

The handling of UE parameters in response to an authentication reject message is an area of ongoing development in wireless communication standards. This includes considerations for managing stored information, such as identity lists, location data, and various counters used in network access attempts. The proper management of these parameters can affect the UE's subsequent behavior, including its ability to select networks, perform cell reselection, and initiate new registration or service requests.

As wireless networks continue to evolve, with the transition from 4G to 5G and beyond, the mechanisms for handling authentication rejections and managing UE parameters are also being refined. These developments aim to enhance security, improve user experience, and optimize network performance in scenarios where authentication challenges arise.

Effective handling of UE parameters following an authentication reject can have implications for network selection, service continuity, and overall system efficiency. It is an area that requires careful consideration to balance security requirements with the need for seamless and reliable wireless connectivity.

### SUMMARY

The example embodiments disclosed herein are directed to solving the issues relating to one or more of the problems presented in the prior art, as well as providing additional features that will become readily apparent by reference to the following detailed description when taken in conjunction with the accompany drawings. In accordance with various embodiments, example systems, methods, devices and computer program products are disclosed herein. It is understood, however, that these embodiments are presented by way of example and are not limiting, and it will be apparent to those of ordinary skill in the art who read the present disclosure that various modifications to the disclosed embodiments can be made while remaining within the scope of this disclosure.

In one embodiment, a wireless communication method performed by a wireless communication device includes receiving, from a wireless communication node, an authentication reject message initiated as a part of a procedure, and in response to receiving the authentication reject message, deleting a network list to which the wireless communication node belongs.

In another embodiment, an apparatus includes a transceiver configured to wirelessly communicate with a network, and a processor coupled to the transceiver and configured to perform operations. The operations include receiving, from the network, an authentication reject message initiated as part of a procedure, and in response to receiving the authentication reject message, deleting a network list to which the network belongs.

In yet another embodiment, a wireless communication method performed by a wireless communication node includes transmitting, to a wireless communication device, an authentication reject message initiated as part of a procedure, wherein a network list to which the wireless communication node belongs is configured to be deleted by the wireless communication device, in response to the wireless communication device receiving the authentication reject message.

In a further embodiment, an apparatus includes a transceiver configured to wirelessly communicate with a network, and a processor coupled to the transceiver and configured to perform operations. The operations include transmitting, to a wireless communication device, an authentication reject message initiated as part of a procedure, wherein a network list to which the apparatus belongs is configured to be deleted by the wireless communication device, in response to the wireless communication device receiving the authentication reject message.

The above and other aspects and their implementations are described in greater detail in the drawings, the descriptions, and the claims.

### BRIEF DESCRIPTION OF FIGURES

Various example embodiments of the present solution are described in detail below with reference to the following figures or drawings. The drawings are provided for purposes of illustration only and merely depict example embodiments of the present solution to facilitate the reader's understanding of the present solution. Therefore, the drawings should not be considered limiting of the breadth, scope, or applicability of the present solution. It should be noted that for clarity and ease of illustration, these drawings are not necessarily drawn to scale.
Figure 1 illustrates an example cellular communication network in which techniques and other aspects disclosed herein may be implemented, in accordance with an embodiment of the present disclosure.
Figure 2 illustrates block diagrams of an example base station and a user equipment device, in accordance with some embodiments of the present disclosure.
Figure 3 illustrates a flowchart of a wireless communication method performed by a wireless communication device, in accordance with some embodiments of the present disclosure.
Figure 4 illustrates a flowchart of a wireless communication method performed by a wireless communication node, in accordance with some embodiments of the present disclosure.

### DETAILED DESCRIPTION

Various example embodiments of the present solution are described below with reference to the accompanying figures to enable a person of ordinary skill in the art to make and use the present solution. As would be apparent to those of ordinary skill in the art, after reading the present disclosure, various changes or modifications to the examples described herein can be made without departing from the scope of the present solution. Thus, the present solution is not limited to the example embodiments and applications described and illustrated herein. Additionally, the specific order or hierarchy of steps in the methods disclosed herein are merely example approaches. Based upon design preferences, the specific order or hierarchy of steps of the disclosed methods or processes can be re-arranged while remaining within the scope of the present solution. Thus, those of ordinary skill in the art will understand that the methods and techniques disclosed herein present various steps or acts in a sample order, and the present solution is not limited to the specific order or hierarchy presented unless expressly stated otherwise.

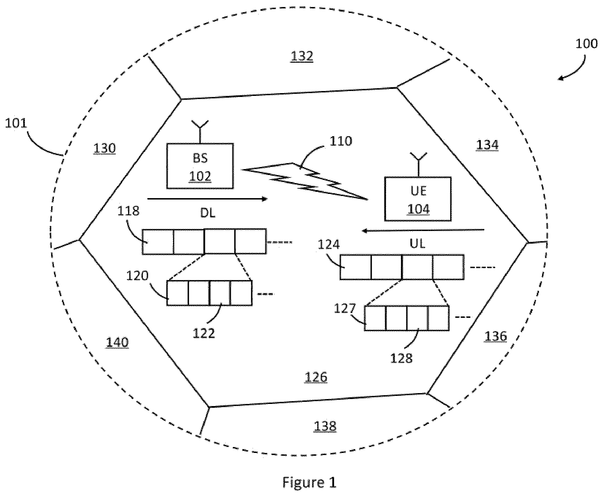

Figure 1 illustrates an example wireless communication network, and/or system, 100 in which techniques disclosed herein may be implemented, in accordance with an embodiment of the present disclosure. In the following discussion, the wireless communication network 100 may be any wireless network, such as a cellular network or a narrowband Internet of things (NB-IoT) network, and is herein referred to as "network 100." Such an example network 100 includes a base station 102 (hereinafter "BS 102") and a user equipment device 104 (hereinafter "UE 104") that can communicate with each other via a communication link 110 (e.g., a wireless communication channel), and a cluster of cells 126, 130, 132, 134, 136, 138 and 140 overlaying a geographical area 101. In Figure 1, the BS 102 and UE 104 are contained within a respective geographic boundary of cell 126. Each of the other cells 130, 132, 134, 136, 138 and 140 may include at least one base station operating at its allocated bandwidth to provide adequate radio coverage to its intended users.

For example, the BS 102 may operate at an allocated channel transmission bandwidth to provide adequate coverage to the UE 104. The BS 102 and the UE 104 may communicate via a downlink radio frame 118, and an uplink radio frame 124 respectively. Each radio frame 118/124 may be further divided into sub-frames 120/127 which may include data symbols 122/128. In the present disclosure, the BS 102 and UE 104 are described herein as non-limiting examples of "communication nodes," generally, which can practice the methods disclosed herein. Such communication nodes may be capable of wireless and/or wired communications, in accordance with various embodiments of the present solution.

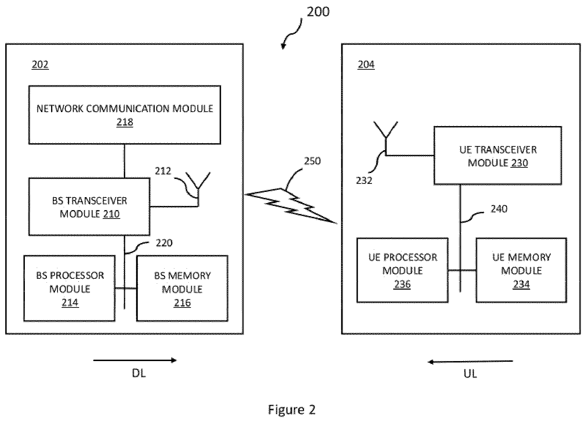

Figure 2 illustrates a block diagram of an example wireless communication system 200 for transmitting and receiving wireless communication signals, e.g., OFDM/OFDMA signals, in accordance with some embodiments of the present solution. The system 200 may include components and elements configured to support known or conventional operating features that need not be described in detail herein. In one illustrative embodiment, system 200 can be used to communicate (e.g., transmit and receive) data symbols in a wireless communication environment such as the wireless communication environment 100 of Figure 1, as described above.

System 200 generally includes a base station 202 (hereinafter "BS 202") and a user equipment device 204 (hereinafter "UE 204"). The BS 202 includes a BS (base station) transceiver module 210, a BS antenna 212, a BS processor module 214, a BS memory module 216, and a network communication module 218, each module being coupled and interconnected with one another as necessary via a data communication bus 220. The UE 204 includes a UE (user equipment) transceiver module 230, a UE antenna 232, a UE memory module 234, and a UE processor module 236, each module being coupled and interconnected with one another as necessary via a data communication bus 240. The BS 202 communicates with the UE 204 via a communication channel 250, which can be any wireless channel or other medium suitable for transmission of data as described herein.

As would be understood by persons of ordinary skill in the art, system 200 may further include any number of modules other than the modules shown in Figure 2. Those skilled in the art will understand that the various illustrative blocks, modules, circuits, and processing logic described in connection with the embodiments disclosed herein may be implemented in hardware, computer-readable software, firmware, or any practical combination thereof. To clearly illustrate this interchangeability and compatibility of hardware, firmware, and software, various illustrative components, blocks, modules, circuits, and steps are described generally in terms of their functionality. Whether such functionality is implemented as hardware, firmware, or software can depend upon the particular application and design constraints imposed on the overall system. Those familiar with the concepts described herein may implement such functionality in a suitable manner for each particular application, but such implementation decisions should not be interpreted as limiting the scope of the present disclosure.

In accordance with some embodiments, the UE transceiver 230 may be referred to herein as an "uplink" transceiver 230 that includes a radio frequency (RF) transmitter and a RF receiver each comprising circuitry that is coupled to the antenna 232. A duplex switch (not shown) may alternatively couple the uplink transmitter or receiver to the uplink antenna in time duplex fashion. Similarly, in accordance with some embodiments, the BS transceiver 210 may be referred to herein as a "downlink" transceiver 210 that includes a RF transmitter and a RF receiver each comprising circuity that is coupled to the antenna 212. A downlink duplex switch may alternatively couple the downlink transmitter or receiver to the downlink antenna 212 in time duplex fashion. The operations of the two transceiver modules 210 and 230 can be coordinated in time such that the uplink receiver circuitry is coupled to the uplink antenna 232 for reception of transmissions over the wireless transmission link 250 at the same time that the downlink transmitter is coupled to the downlink antenna 212. In some embodiments, there is close time synchronization with a minimal guard time between changes in duplex direction.

The UE transceiver 230 and the base station transceiver 210 are configured to communicate via the wireless data communication link 250, and cooperate with a suitably configured RF antenna arrangement 212/232 that can support a particular wireless communication protocol and modulation scheme. In some illustrative embodiments, the UE transceiver 210 and the base station transceiver 210 are configured to support industry standards such as the Long Term Evolution (LTE) and emerging 5G standards, and the like. It is understood, however, that the present disclosure is not necessarily limited in application to a particular standard and associated protocols. Rather, the UE transceiver 230 and the base station transceiver 210 may be configured to support alternate, or additional, wireless data communication protocols, including future standards or variations thereof.

In accordance with various embodiments, the BS 202 may be an evolved node B (eNB), a serving eNB, a target eNB, a femto station, or a pico station, for example. In some embodiments, the UE 204 may be embodied in various types of user devices such as a mobile phone, a smart phone, a personal digital assistant (PDA), tablet, laptop computer, wearable computing device, etc. The processor modules 214 and 236 may be implemented, or realized, with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. In this manner, a processor may be realized as a microprocessor, a controller, a microcontroller, a state machine, or the like. A processor may also be implemented as a combination of computing devices, e.g., a combination of a digital signal processor and a microprocessor, a plurality of microprocessors, one or more microprocessors in conjunction with a digital signal processor core, or any other such configuration.

Furthermore, the steps of a method or algorithm described in connection with the embodiments disclosed herein may be embodied directly in hardware, in firmware, in a software module executed by processor modules 214 and 236, respectively, or in any practical combination thereof. The memory modules 216 and 234 may be realized as RAM memory, flash memory, ROM memory, EPROM memory, EEPROM memory, registers, a hard disk, a removable disk, a CD-ROM, or any other form of storage medium known in the art. In this regard, memory modules 216 and 234 may be coupled to the processor modules 210 and 230, respectively, such that the processors modules 210 and 230 can read information from, and write information to, memory modules 216 and 234, respectively. The memory modules 216 and 234 may also be integrated into their respective processor modules 210 and 230. In some embodiments, the memory modules 216 and 234 may each include a cache memory for storing temporary variables or other intermediate information during execution of instructions to be executed by processor modules 210 and 230, respectively. Memory modules 216 and 234 may also each include non-volatile memory for storing instructions to be executed by the processor modules 210 and 230, respectively.

The network communication module 218 generally represents the hardware, software, firmware, processing logic, and/or other components of the base station 202 that enable bi-directional communication between base station transceiver 210 and other network components and communication nodes configured to communication with the base station 202. For example, network communication module 218 may be configured to support internet or WiMAX traffic. In a typical deployment, without limitation, network communication module 218 provides an 802.3 Ethernet interface such that base station transceiver 210 can communicate with a conventional Ethernet based computer network. In this manner, the network communication module 218 may include a physical interface for connection to the computer network (e.g., Mobile Switching Center (MSC)). The terms "configured for," "configured to" and conjugations thereof, as used herein with respect to a specified operation or function, refer to a device, component, circuit, structure, machine, signal, etc., that is physically constructed, programmed, formatted and/or arranged to perform the specified operation or function.

The present disclosure relates to methods and systems for handling user equipment (UE) parameters in wireless communication networks, particularly in scenarios where authentication is rejected. In various wireless communication standards, including emerging 6G technologies, the management of UE parameters following an authentication reject message from the network plays a crucial role in maintaining network security and efficiency. This disclosure addresses challenges associated with UE behavior upon receiving an authentication reject message, including the handling of stored network lists, attempt counters, and other relevant parameters. The techniques described herein may enhance the robustness of wireless communication systems by providing improved methods for UE parameter management in response to authentication failures.

The following detailed descriptions of claim elements are provided with reference to FIG. 2 for illustrative purposes.

In some cases, a wireless communication device may receive a response to a registration request from a wireless communication node. The wireless communication device may be represented by the user equipment (UE) 204 shown in FIG. 2, while the wireless communication node may be represented by the base station (BS) 202. The response indicating rejection to the registration request may be transmitted by the BS 202 and received by the UE 204 via the communication channel 250.

Upon receiving the response indicating rejection, the wireless communication device may delete a network list to which the wireless communication node belongs. This operation may be performed by the UE processor module 236 in conjunction with the UE memory module 234. The network list may include a Public Land Mobile Network (PLMN) list or a Standalone Non-Public Network (SNPN) list, which may be stored in the UE memory module 234.

In some cases, the wireless communication device may reset various counters in response to receiving the rejection response. These counters may include a registration attempt counter, an attach attempt counter, a service attempt counter, and a Tracking Area Update (TAU) attempt counter. The resetting of these counters may be executed by the UE processor module 236 and the updated values may be stored in the UE memory module 234.

The wireless communication node, represented by the BS 202 in FIG. 2, may transmit the response indicating rejection to the registration request. This transmission may be performed by the BS transceiver module 210 via the BS antenna 212. The BS processor module 214 may generate the rejection response based on authentication failure or other criteria stored in the BS memory module 216.

In some cases, the wireless communication node may be configured such that its network list is deleted by the wireless communication device upon receiving the rejection response. This configuration may be implemented in the BS processor module 214 and may involve sending specific information in the rejection response that instructs the wireless communication device to delete the network list.

The wireless communication device and the wireless communication node may communicate via a wireless communication channel, represented by the communication channel 250 in FIG. 2. This channel may utilize various wireless communication protocols, which may be implemented by the respective transceiver modules (UE transceiver module 230 and BS transceiver module 210) of the devices.

In some cases, a wireless communication device may receive a response to a registration request from a wireless communication node. The wireless communication device may be a user equipment (UE) device, such as the UE 204 shown in FIG. 2. The response may indicate rejection of the registration request.

Upon receiving the response indicating rejection, the wireless communication device may delete a network list to which the wireless communication node belongs. The network list may include a Public Land Mobile Network (PLMN) list or a Standalone Non-Public Network (SNPN) list. This deletion operation may be performed by the UE processor module 236 in conjunction with the UE memory module 234.

In some cases, the wireless communication device may set an update status to a specific value, such as 5U3 ROAMING NOT ALLOWED, in response to receiving the rejection response. The wireless communication device may also delete stored parameters, which may include a 5G Globally Unique Temporary Identifier (5G-GUTI), a Tracking Area Identity (TAI) list, a last visited registered TAI, and a Next Generation Key Set Identifier (ngKSI).

The wireless communication device may reset various counters in response to receiving the rejection response. These counters may include:
1. A registration attempt counter
2. An attach attempt counter
3. A service attempt counter
4. A Tracking Area Update (TAU) attempt counter

The resetting of these counters may be executed by the UE processor module 236, and the updated values may be stored in the UE memory module 234.

In some cases, when the rejection response is received in the context of a PLMN, the Universal Subscriber Identity Module (USIM) of the wireless communication device may be considered invalid. The USIM may remain in this invalid state until the wireless communication device is switched off or until the Universal Integrated Circuit Card (UICC) containing the USIM is removed from the wireless communication device.

The wireless communication method described above may enhance the security and efficiency of wireless communication systems by providing a structured approach to handling authentication rejections. By deleting network lists, resetting counters, and managing USIM validity, the wireless communication device may maintain a more accurate and up-to-date status, potentially improving subsequent connection attempts and overall network performance.

In some cases, an apparatus for wireless communication may be provided. The apparatus may include components similar to those of the user equipment (UE) 204 shown in FIG. 2. The apparatus may comprise a transceiver configured to wirelessly communicate with a network and a processor coupled to the transceiver.

The transceiver of the apparatus may be similar to the UE transceiver module 230 shown in FIG. 2. The transceiver may be configured to wirelessly communicate with a network via a communication channel, which may be similar to the communication channel 250 depicted in FIG. 2.

The processor of the apparatus may be similar to the UE processor module 236 shown in FIG. 2. The processor may be coupled to the transceiver and configured to perform various operations.

In some cases, the processor may be configured to receive, from the network, a response to a registration request. The response may indicate rejection of the registration request. This operation may be performed in conjunction with the transceiver, which may receive the response via the wireless communication channel.

Upon receiving the response indicating rejection, the processor may be configured to delete a network list to which the network belongs. The network list may include a Public Land Mobile Network (PLMN) list or a Standalone Non-Public Network (SNPN) list. The network list may be stored in a memory module of the apparatus, which may be similar to the UE memory module 234 shown in FIG. 2.

In some cases, the processor may be configured to reset various counters in response to receiving the rejection response. These counters may include:
1. A registration attempt counter
2. An attach attempt counter
3. A service attempt counter
4. A Tracking Area Update (TAU) attempt counter

The processor may reset these counters by setting their values to a predetermined initial value, such as zero. The updated counter values may be stored in the memory module of the apparatus.

The resetting of the registration attempt counter may be particularly useful in scenarios where multiple registration attempts have failed. By resetting this counter, the apparatus may be able to initiate a new series of registration attempts without being constrained by previous failures.

The resetting of the attach attempt counter may be beneficial in situations where the apparatus has been unable to attach to the network. This reset may allow the apparatus to make fresh attach attempts, potentially with different parameters or on different networks.

The service attempt counter may be reset to allow the apparatus to make new service requests without being limited by previous unsuccessful attempts. This may be particularly useful when transitioning between different types of services or when attempting to access services after a period of inactivity.

The resetting of the Tracking Area Update (TAU) attempt counter may enable the apparatus to perform new TAU procedures, which are important for maintaining the apparatus's location information within the network.

By configuring the processor to perform these operations, the apparatus may maintain a more accurate and up-to-date status, potentially improving subsequent connection attempts and overall network performance. The apparatus may be able to adapt more effectively to changing network conditions and recover more quickly from authentication failures or other issues that may have led to the rejection of the registration request.

In some cases, a wireless communication method may be performed by a wireless communication node, such as the base station (BS) 202 shown in FIG. 2. The method may include transmitting, by the BS 202 to a wireless communication device, a response to a registration request. The response may indicate rejection of the registration request.

The BS 202 may transmit the response using the BS transceiver module 210 via the BS antenna 212. The BS processor module 214 may generate the rejection response based on authentication failure or other criteria stored in the BS memory module 216. The response may be transmitted over the communication channel 250 to the wireless communication device.

In some cases, the network list to which the BS 202 belongs may be configured to be deleted by the wireless communication device in response to the wireless communication device receiving the rejection response. This configuration may be implemented in the BS processor module 214 and may involve sending specific information in the rejection response that instructs the wireless communication device to delete the network list.

The network list may include a Public Land Mobile Network (PLMN) list or a Standalone Non-Public Network (SNPN) list. The deletion of this list by the wireless communication device may help ensure that outdated or invalid network information is not retained after an authentication rejection.

In some cases, the wireless communication device may be configured to reset various counters in response to receiving the rejection response from the BS 202. These counters may include a registration attempt counter, an attach attempt counter, a service attempt counter, and a Tracking Area Update (TAU) attempt counter. The resetting of these counters may allow the wireless communication device to make fresh attempts at registration, attachment, service requests, and tracking area updates without being constrained by previous failures.

The BS 202 may initiate different procedures based on the type of identity used by the wireless communication device in the initial NAS message. If a 5G-GUTI (5G Globally Unique Temporary Identifier) was used, the BS 202 may initiate an identification procedure to retrieve the SUCI (Subscription Concealed Identifier) from the wireless communication device. After retrieving the SUCI, the BS 202 may restart the 5G AKA (Authentication and Key Agreement) based primary authentication and key agreement procedure with the received SUCI.

If the SUCI was used for identification in the initial NAS message or in a restarted 5G AKA based primary authentication and key agreement procedure, the BS 202 may send an AUTHENTICATION REJECT message to the wireless communication device. The BS 202 may also send this message if the network decides not to initiate the identification procedure after an unsuccessful 5G AKA based primary authentication and key agreement procedure.

When sending an AUTHENTICATION REJECT message, the BS 202 may maintain the 5GMM-context (5G Mobility Management context) and 5G NAS (Non-Access Stratum) security context of the wireless communication device unchanged. This preservation of contexts may allow for potential future recovery or analysis of the authentication failure.

The method performed by the BS 202 may enhance the security and efficiency of wireless communication systems by providing a structured approach to handling authentication rejections. By instructing the wireless communication device to delete network lists and reset counters, the BS 202 may help maintain a more accurate and up-to-date status of devices in the network, potentially improving subsequent connection attempts and overall network performance.

In some cases, an apparatus for wireless communication may be provided. The apparatus may include components similar to those of the base station (BS) 202 shown in FIG. 2. The apparatus may comprise a transceiver configured to wirelessly communicate with a network and a processor coupled to the transceiver.

The transceiver of the apparatus may be similar to the BS transceiver module 210 shown in FIG. 2. The transceiver may be configured to wirelessly communicate with a network via a communication channel, which may be similar to the communication channel 250 depicted in FIG. 2.

The processor of the apparatus may be similar to the BS processor module 214 shown in FIG. 2. The processor may be coupled to the transceiver and configured to perform various operations.

In some cases, the processor may be configured to transmit, to a wireless communication device, a response to a registration request. The response may indicate rejection of the registration request. This operation may be performed in conjunction with the transceiver, which may transmit the response via the wireless communication channel.

The apparatus may be configured such that a network list to which the apparatus belongs is deleted by the wireless communication device in response to the wireless communication device receiving the rejection response. This configuration may be implemented in the processor and may involve sending specific information in the rejection response that instructs the wireless communication device to delete the network list.

The network list may include a Public Land Mobile Network (PLMN) list or a Standalone Non-Public Network (SNPN) list. The deletion of this list by the wireless communication device may help ensure that outdated or invalid network information is not retained after an authentication rejection.

In some cases, the wireless communication device may be configured to reset various counters in response to receiving the rejection response from the apparatus. These counters may include a registration attempt counter, an attach attempt counter, a service attempt counter, and a Tracking Area Update (TAU) attempt counter. The resetting of these counters may allow the wireless communication device to make fresh attempts at registration, attachment, service requests, and tracking area updates without being constrained by previous failures.

The apparatus may initiate different procedures based on the type of identity used by the wireless communication device in the initial NAS message. If a 5G-GUTI (5G Globally Unique Temporary Identifier) was used, the apparatus may initiate an identification procedure to retrieve the SUCI (Subscription Concealed Identifier) from the wireless communication device. After retrieving the SUCI, the apparatus may restart the 5G AKA (Authentication and Key Agreement) based primary authentication and key agreement procedure with the received SUCI.

If the SUCI was used for identification in the initial NAS message or in a restarted 5G AKA based primary authentication and key agreement procedure, the apparatus may send an AUTHENTICATION REJECT message to the wireless communication device. The apparatus may also send this message if the network decides not to initiate the identification procedure after an unsuccessful 5G AKA based primary authentication and key agreement procedure.

When sending an AUTHENTICATION REJECT message, the apparatus may maintain the 5GMM-context (5G Mobility Management context) and 5G NAS (Non-Access Stratum) security context of the wireless communication device unchanged. This preservation of contexts may allow for potential future recovery or analysis of the authentication failure.

The apparatus may enhance the security and efficiency of wireless communication systems by providing a structured approach to handling authentication rejections. By instructing the wireless communication device to delete network lists and reset counters, the apparatus may help maintain a more accurate and up-to-date status of devices in the network, potentially improving subsequent connection attempts and overall network performance.

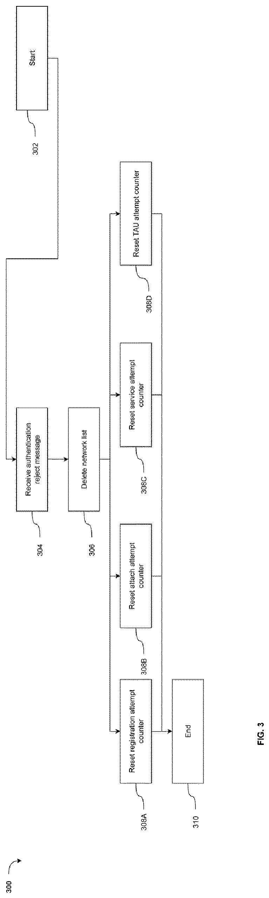

In some cases, the user equipment (UE) 204 may perform a wireless communication method 300 as illustrated in FIG. 3. The method 300 may begin at step 302, where the UE 204 receives an authentication reject message initiated as part of a procedure. This authentication reject message may be transmitted by a wireless communication node, such as the base station 202, and received by the UE transceiver module 230 via the communication channel 250. The procedure may be a registration procedure, an attach procedure, or a Tracking Area Update (TAU) procedure.

Upon receiving the authentication reject message, the method 300 may proceed to decision 304, where the UE processor module 236 may determine or otherwise identify if the received message is an authentication reject message. This determination may involve analyzing the content of the received message to identify specific authentication rejection indicators or codes.

If the message is determined to be an authentication reject message (Yes branch from decision 304), the method 300 may advance to step 306. In step 306, the UE processor module 236 may delete a network list to which the wireless communication node belongs. This network list may be stored in the UE memory module 234 and may include a Public Land Mobile Network (PLMN) list or an eqivalent Standalone Non-Public Network (SNPN) list. The deletion of this list may help ensure that the UE 204 does not retain outdated or invalid network information after an authentication rejection.

Following the deletion of the network list, the method 300 may proceed to perform multiple counter reset operations in parallel, as shown in steps 308A, 308B, 308C, and 308D in FIG. 3. In step 308A, the UE processor module 236 may reset a registration attempt counter. This reset may allow the UE 204 to initiate a new series of registration attempts without being constrained by previous failures. In step 308B, the UE processor module 236 may reset an attach attempt counter. This reset may enable the UE 204 to make fresh attach attempts, potentially with different parameters or on different networks. Step 308C may involve the UE processor module 236 resetting a service attempt counter. This reset may allow the UE 204 to make new service requests without being limited by previous unsuccessful attempts. In step 308D, the UE processor module 236 may reset a Tracking Area Update (TAU) attempt counter. This reset may enable the UE 204 to perform new TAU procedures, which may be important for maintaining the UE's location information within the network.

The UE processor module 236 may reset these counters by setting their values to a predetermined initial value, such as zero. The updated counter values may be stored in the UE memory module 234. After performing the counter reset operations, the method 300 may conclude at step 310. The UE transceiver module 230 may then be configured by the UE processor module 236 to attempt new connections based on the reset counters and updated network list status.

If the received message is determined not to be an authentication reject message (No branch from decision 304), the method 300 may proceed directly to step 310, bypassing the network list deletion and counter reset operations. The UE processor module 236 may then instruct the UE transceiver module 230 to continue normal operations according to the type of message received.

By performing the method 300, the UE 204 may maintain a more accurate and up-to-date status, potentially improving subsequent connection attempts and overall network performance. The UE 204 may be able to adapt more effectively to changing network conditions and recover more quickly from authentication failures or other issues that may have led to the rejection of the registration request.

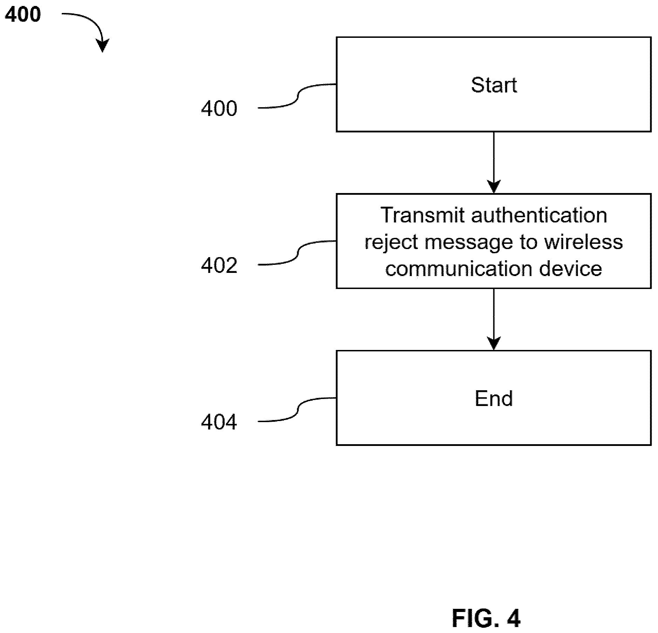

In some cases, the base station (BS) 202 may perform a wireless communication method 400 as illustrated in FIG. 4. The method 400 may begin at step 402, where the BS 202 transmits an authentication reject message to a wireless communication device as part of a procedure. This authentication reject message may be generated by the BS processor module 214 and transmitted by the BS transceiver module 210 via the communication channel 250. The procedure may be a registration procedure, an attach procedure, or a Tracking Area Update (TAU) procedure.

The BS processor module 214 may generate the authentication reject message based on various factors, such as failed authentication attempts, security concerns, or network policies. The processor module may also determine the specific content of the reject message, including any instructions or codes that may trigger actions on the receiving wireless communication device.

Once the authentication reject message is generated, the BS processor module 214 may instruct the BS transceiver module 210 to transmit the message. The BS transceiver module 210 may then encode the message, modulate it onto a carrier signal, and transmit it through the BS antenna 212 over the communication channel 250.

After transmitting the authentication reject message, the method 400 may conclude at step 404. At this point, the BS processor module 214 may update internal records or contexts related to the authentication attempt and prepare for subsequent communication attempts from the same or other wireless communication devices.

In some implementations, the BS processor module 214 may be configured to include specific information in the authentication reject message that instructs the receiving wireless communication device to delete a network list to which the BS 202 belongs. This network list may include a Public Land Mobile Network (PLMN) list or an equivalent Standalone Non-Public Network (SNPN) list.

The BS processor module 214 may also be configured to include information in the authentication reject message that prompts the receiving wireless communication device to reset various counters. These counters may include a registration attempt counter, an attach attempt counter, a service attempt counter, and a Tracking Area Update (TAU) attempt counter.

In some cases, the wireless communication method performed by the wireless communication node may include additional aspects as described in claims 15-17:

The procedure may be a registration procedure, an attach procedure, or a Tracking Area Update (TAU) procedure. This allows the method to be applicable in various scenarios where authentication is required.

The network list to which the wireless communication node belongs may include a Public Land Mobile Network (PLMN) list or an equivalent Standalone Non-Public Network (SNPN) list. This specification of the network list type ensures clarity in what information the wireless communication device is expected to delete upon receiving the authentication reject message.

In response to receiving the authentication reject message, the wireless communication device may be configured to reset at least one of: a registration attempt counter, an attach attempt counter, a service attempt counter, or a Tracking Area Update (TAU) attempt counter. This resetting of counters may allow the wireless communication device to make fresh attempts at various procedures without being constrained by previous failures.

By implementing these aspects, the wireless communication method performed by the BS 202 may contribute to maintaining accurate and up-to-date network information on wireless communication devices, potentially improving the efficiency and reliability of the overall wireless communication system.

In some implementations, the rejection response transmitted in step 404 may include specific information or codes that instruct the wireless communication device to perform additional actions. These actions may include resetting various counters such as a registration attempt counter, an attach attempt counter, a service attempt counter, or a Tracking Area Update (TAU) attempt counter. By prompting the reset of these counters, the BS 202 may enable the wireless communication device to make fresh attempts at registration, attachment, service requests, and tracking area updates without being constrained by previous failures.

The method 400 may conclude at step 402, which marks the end of the process. After transmitting the rejection response, the BS 202 may prepare to handle subsequent communication attempts from the same or other wireless communication devices. The BS processor module 214 may update relevant contexts or parameters to reflect the completed rejection process.

By implementing the method 400, the BS 202 may enhance the efficiency and security of the wireless communication system. The structured approach to handling registration rejections and managing network lists on wireless communication devices may help maintain a more accurate representation of the network status. This may potentially lead to improved subsequent connection attempts and overall network performance.

The method 400 may be adaptable to various network configurations and protocols. In some cases, the specific actions triggered by the rejection response may be customized based on the type of wireless communication device, the nature of the authentication failure, or the current network conditions. This flexibility may allow the BS 202 to optimize its response strategy for different scenarios, further enhancing the robustness of the wireless communication system.

While various embodiments of the present solution have been described above, it should be understood that they have been presented by way of example only, and not by way of limitation. Likewise, the various diagrams may depict an example architectural or configuration, which are provided to enable persons of ordinary skill in the art to understand example features and functions of the present solution. Such persons would understand, however, that the solution is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described illustrative embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A person of ordinary skill in the art would further appreciate that any of the various illustrative logical blocks, modules, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software module), or any combination of these techniques. To clearly illustrate this interchangeability of hardware, firmware and software, various illustrative components, blocks, modules, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure.

Furthermore, a person of ordinary skill in the art would understand that various illustrative logical blocks, modules, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, modules, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein.

If implemented in software, the functions can be stored as one or more instructions or code on a computer-readable medium. Thus, the steps of a method or algorithm disclosed herein can be implemented as software stored on a computer-readable medium. Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "module" as used herein, refers to software, firmware, hardware, and any combination of these elements for performing the associated functions described herein. Additionally, for purpose of discussion, the various modules are described as discrete modules; however, as would be apparent to one of ordinary skill in the art, two or more modules may be combined to form a single module that performs the associated functions according embodiments of the present solution.

Additionally, memory or other storage, as well as communication components, may be employed in embodiments of the present solution. It will be appreciated that, for clarity purposes, the above description has described embodiments of the present solution with reference to different functional units and processors. However, it will be apparent that any suitable distribution of functionality between different functional units, processing logic elements or domains may be used without detracting from the present solution. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

Various embodiments are set out in the following numbered clauses.

Clause 1. A wireless communication method, comprising: receiving, by a wireless communication device from a wireless communication node, a authentication reject message initiated as a part of a procedure; and in response to receiving the authentication reject message, deleting, by the wireless communication device, a network list to which the wireless communication node belongs.

Clause 2. The wireless communication method of Clause 1, wherein the procedure is a registration procedure, an attach procedure, or a Tracking Are Update (TAU) procedure.

Clause 3. The wireless communication method of Clause 1, wherein the network list includes a Public Land Mobile Network (PLMN) list or an equivalent Standalone Non-Public Network (SNPN) list.

Clause 4. The wireless communication method of Clause 1, in response to receiving the authentication reject message, further comprising: resetting, by the wireless communication device, a registration attempt counter.

Clause 5. The wireless communication method of Clause 1, in response to receiving the authentication reject message, further comprising: resetting, by the wireless communication device, an attach attempt counter.

Clause 6. The wireless communication method of Clause 1, in response to receiving the authentication reject message, further comprising: resetting, by the wireless communication device, a service attempt counter.

Clause 7. The wireless communication method of Clause 1, in response to receiving the authentication reject message, further comprising: resetting, by the wireless communication device, a Tracking Area Update (TAU) attempt counter.

Clause 8. An apparatus, comprising: a transceiver configured to wirelessly communicate with a network; and a processor coupled to the transceiver and configured to operations comprising: receiving, from the network, an authentication reject message initiated as part of a procedure; and in response to receiving the authentication reject message, deleting a network list to which the network belongs.

Clause 9. The apparatus of Clause 8, wherein the procedure is a registration procedure, an attach procedure, or a Tracking Are Update (TAU) procedure.

Clause 10. The apparatus of Clause 8, wherein the network list includes a Public Land Mobile Network (PLMN) list or an equivalent Standalone Non-Public Network (SNPN) list.

Clause 10. The apparatus of Clause 8, wherein the operations further comprise: resetting a registration attempt counter.

Clause 11. The apparatus of Clause 8, wherein the operations further comprise: resetting an attach attempt counter.

Clause 12. The apparatus of Clause 8, wherein the operations further comprise: resetting a service attempt counter.

Clause 13. The apparatus of Clause 8, wherein the operations further comprise: resetting a Tracking Area Update (TAU) attempt counter.

Clause 14. A wireless communication method, comprising: transmitting, by a wireless communication node to a wireless communication device, an authentication reject message initiated as part of a procedure; wherein a network list to which the wireless communication node belongs is configured to be deleted by the wireless communication device, in response to the wireless communication device receiving the authentication reject message.

Clause 15. The wireless communication method of Clause 14, wherein the procedure is a registration procedure, an attach procedure, or a Tracking Are Update (TAU) procedure.

Clause 16. The wireless communication method of Clause 14, wherein the network list includes a Public Land Mobile Network (PLMN) list or an equivalent Standalone Non-Public Network (SNPN) list.

Clause 17. The wireless communication method of Clause 14, wherein, in response to receiving the authentication reject message, the wireless communication device is configured to reset at least one of: a registration attempt counter, an attach attempt counter, a service attempt counter, or a Tracking Area Update (TAU) attempt counter.

Clause 18. An apparatus, comprising: a transceiver configured to wirelessly communicate with a network; and a processor coupled to the transceiver and configured to operations comprising: transmitting, to a wireless communication device, an authentication reject message initiated as part of a procedure, wherein a network list to which the apparatus belongs is configured to be deleted by the wireless communication device, in response to the wireless communication device receiving the authentication reject message.

Clause 19. The apparatus of Clause 18, wherein the network list includes a Public Land Mobile Network (PLMN) or an equivalent Standalone Non-Public Network (SNPN) list.

Clause 20. The apparatus of Clause 18, wherein the procedure is a registration procedure, an attach procedure, or a Tracking Are Update (TAU) procedure.

## Claims

1. A wireless communication method, comprising:
receiving (304), by a wireless communication device (204) from a wireless communication node (202), an authentication reject message initiated as a part of a procedure; and
in response to receiving the authentication reject message, deleting (306), by the wireless communication device (204), a network list to which the wireless communication node (202) belongs.

2. The wireless communication method of claim 1, wherein the procedure is a registration procedure, an attach procedure, or a Tracking Are Update, TAU, procedure.

3. The wireless communication method of claim 1, wherein the network list includes a Public Land Mobile Network, PLMN, list or an equivalent Standalone Non-Public Network, SNPN, list.

4. The wireless communication method of claim 1, in response to receiving the authentication reject message, further comprising at least one of:
resetting (308A), by the wireless communication device (204), a registration attempt counter;
resetting (308B), by the wireless communication device (204), an attach attempt counter;
resetting (308C), by the wireless communication device (204), a service attempt counter; or
resetting (308D), by the wireless communication device (204), a TAU attempt counter.

5. An apparatus (204), comprising:
a transceiver (230) configured to wirelessly communicate with a network; and
a processor (236) coupled to the transceiver (230) and configured to operations comprising:
receiving, from the network, an authentication reject message initiated as part of a procedure; and
in response to receiving the authentication reject message, deleting a network list to which the network belongs.

6. The apparatus (204) of claim 5, wherein the procedure is a registration procedure, an attach procedure, or a Tracking Are Update, TAU, procedure.

7. The apparatus (204) of claim 5, wherein the network list includes a Public Land Mobile Network, PLMN, list or an equivalent Standalone Non-Public Network, SNPN, list.

8. The apparatus (204) of claim 5, wherein the operations further comprise at least one of:
resetting a registration attempt counter;
resetting an attach attempt counter;
resetting a service attempt counter; or
resetting a TAU attempt counter.

9. A wireless communication method, comprising:
transmitting (400), by a wireless communication node (202) to a wireless communication device (204), an authentication reject message initiated as part of a procedure;
wherein a network list to which the wireless communication node (202) belongs is configured to be deleted by the wireless communication device (204), in response to the wireless communication device (204) receiving the authentication reject message.

10. The wireless communication method of claim 9, wherein the procedure is a registration procedure, an attach procedure, or a Tracking Are Update, TAU, procedure.

11. The wireless communication method of claim 9, wherein the network list includes a Public Land Mobile Network, PLMN, list or an equivalent Standalone Non-Public Network, SNPN, list.

12. The wireless communication method of claim 9, wherein, in response to receiving the authentication reject message, the wireless communication device (204) is configured to reset at least one of: a registration attempt counter, an attach attempt counter, a service attempt counter, or a TAU attempt counter.

13. An apparatus (202), comprising:
a transceiver (210) configured to wirelessly communicate with a wireless communication device (204); and
a processor (212) coupled to the transceiver (210) and configured to operations comprising:
transmitting, to the wireless communication device (204), an authentication reject message initiated as part of a procedure, wherein a network list to which the apparatus (202) belongs is configured to be deleted by the wireless communication device (204), in response to the wireless communication device (204) receiving the authentication reject message.

14. The apparatus (202) of claim 13, wherein the network list includes a Public Land Mobile Network, PLMN, or an equivalent Standalone Non-Public Network, SNPN, list.

15. The apparatus (202) of claim 13, wherein the procedure is a registration procedure, an attach procedure, or a TAU procedure.
